# EUROPÄISCHE PATENTSCHRIFT

(11) **EP 1 206 677 B1**
(45) Veröffentlichungstag und Bekanntmachung des Hinweises auf die Patenterteilung: **23.02.2005**
(21) Anmeldenummer: 00962188.9
(22) Anmeldetag: 01.08.2000
(51) Int. Cl.: G01B 11/275

(54) **ZEITAUFGELÖSTE PHOTOGRAMMETRISCHE MESSUNG VON RADSTELLUNGSWERTEN**
TIME-RESOLVED PHOTOGRAMMETRIC MEASUREMENT OF WHEEL POSITION VALUES
MESURE PHOTOGRAMMETRIQUE AVEC RESOLUTION TEMPORELLE DE VALEURS DE POSITIONS DE ROUES

(30) Priorität: 05.08.1999 DE 19937035
(43) Veröffentlichungstag der Anmeldung: 22.05.2002
(73) Patentinhaber: DaimlerChrysler AG, 70567 Stuttgart (DE)
(72) Erfinder: ZIEGLER, Marcus, D-81247 München (DE); WIORA, Georg, D-70197 Stuttgart (DE)
(86) Internationale Anmeldenummer: PCT/DE2000/002539
(87) Internationale Veröffentlichungsnummer: WO 2001/011313

(56) Entgegenhaltungen:
- EP-A- 0 880 009
- US-A- 5 675 515
- US-A- 5 870 315

## Beschreibung

Die vorliegende Erfindung betrifft allgemein ein Verfahren sowie eine Vorrichtung zur dreidimensionalen zeitaufgelösten photogrammetrischen Erfassung eines bewegten Objekts, und insbesondere ein Verfahren sowie eine Vorrichtung zur zeitaufgelösten photogrammetrischen Messung der dreidimensionalen Radposition eines Fahrzeugs im Fahrbetrieb.

Aus DE-A1-197 57 760 oder DE-A1-197 57 763 ist eine Vorrichtung zur Bestimmung der Rad- und/oder Achsengeometrie von Kraftfahrzeugen mit einer optischen Meßeinrichtung bekannt. Die optische Meßeinrichtung ist mit Bildaufnehmern ausgestattet, die das zu erfassende Rad bzw. die zu erfassende Achse aus mindestens zwei unterschiedlichen Perspektiven aufnehmen. Die bekannte Vorrichtung umfaßt weiterhin eine zwischen der Meßeinrichtung und dem Rad angebrachte Anordnung zum Tragen von Bezugsmarkierungen sowie zusätzliche Radmarkierungen.

Figur 1 in der EP-A2- 880 009 zeigt Hilfskonstruktionen mit einer schwenklbaren Kamera um stehenden Fahrzeug. Eine einzige Perspektive für die Kamera zeigt Figur 4 in der US-A- 5 870 315.

Daher ist es eine Aufgabe der vorliegenden Erfindung, eine Vorrichtung und ein Verfahren zur Verfügung zu stellen, mit dem auf einfache Weise der Ort und die Orientierung eines Objektes im Raum hochgenau und zeitaufgelöst bestimmt werden kann. Diese und weitere der nachstehenden Beschreibung zu entnehmenden Aufgaben werden durch eine Vorrichtung bzw. ein Verfahren gemäß den Ansprüchen 1,12 gelöst.

Die erfindungsgemäße Vorrichtung bzw. das erfindungsgemäße Verfahren zeichnet sich dadurch aus, daß die Position des zu bestimmenden Objektes relativ zur Position eines Referenzobjektes bestimmt wird, wobei sowohl das zu bestimmende als auch das Referenzobjekt durch Marken einer beliebigen Ausformung und Größe gekennzeichnet sind. Erfindungsgemäß erfolgt die Bestimmung zu einem bestimmtem Zeitpunkt durch simultane Aufnahme der beiden Objekte durch lediglich eine Kamera mit nur einem Bild, wobei die Kamera keinen festen Bezug zum zu bestimmenden Objekt oder zum Referenzobjekt haben muß. Mit dem vorliegenden Verfahren bzw. mit der Vorrichtung ist es möglich, Lenkwinkel, Sturzwinkel und Federweg eines Fahrzeugs zuverlässig und mit einer hohen Auflösung zu bestimmen.

Die natürliche Oberflächentextur, der zu bestimmenden Objekte oder des Referenzobjekts kann als Marke dienen. Nach einem bevorzugten Aspekt der Erfindung werden photogrammetrische Marken, die auf dem zu bestimmenden Objekt und/oder auch auf dem Referenzobjekt bereitgestellt werden, eingesetzt.

Weitere Merkmale und Vorteile sind deutlicher der folgenden Beschreibung der bevorzugten Ausführungsbeispiele der Erfindung, unter Hinweis auf die beiliegenden Figuren zu entnehmen, wobei
Fig. 1a eine seitliche Ansicht der ersten Ausführungsform der erfindungsgemäßen Vorrichtung zur dreidimensionalen zeitaufgelösten photogrammetrischen Erfassung eines Objekts zeigt;
Fig. 1b eine Draufsicht der ersten Ausführungsform zeigt;
Fig. 1c eine perspektivische Ansicht der Vorrichtung der Figuren 1a und 1b zeigt.
Fig. 2a eine seitliche Ansicht der zweiten Ausführungsform der erfindungsgemäßen Vorrichtung zur dreidimensionalen zeitaufgelösten photogrammetrischen Erfassung eines Objekts zeigt; und
Fig. 2b eine Draufsicht der zweiten Ausführungsform zeigt.

Obwohl die Erfindung im Zusammenhang mit der Vermessung der dreidimensionalen Radposition während des Fahrbetriebs eines Fahrzeugs veranschaulicht wird, versteht sich für den Fachmann von selbst, daß das der Erfindung zugrundeliegende Konzept für jede dynamische oder statische Objekterfassung einsetzbar ist.

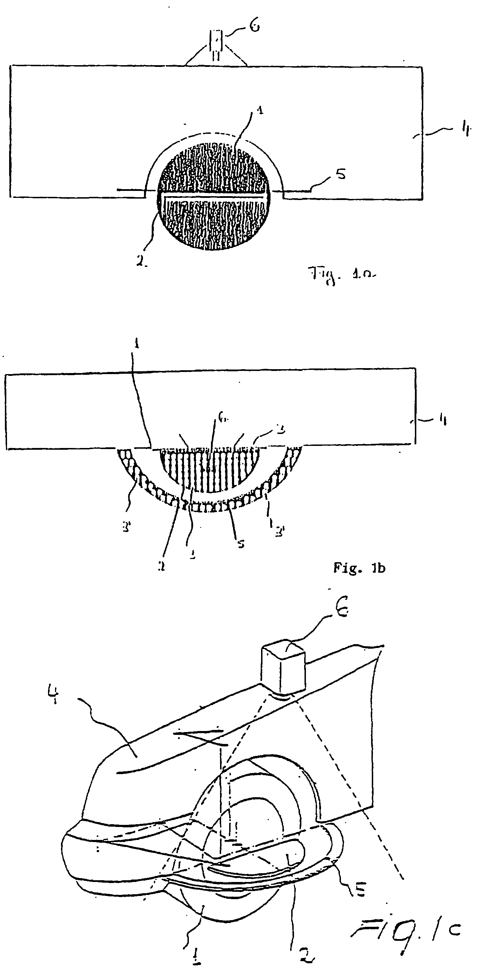

Unter Bezugnahme auf die Figuren 1a bis 1c wird an dem zu vermessenden Rad 1 eine erste Hilfskonstruktion 2 derart angebracht, daß diese während der Messung ortsfest zur nicht dargestellten Radachse bleibt (z. B. durch die Montage an der Radnabe). Besonders vorteilhaft, ist die erste Hilfskonstruktion 2 aus einem leichten, formbeständigen Material ausgebildet. Die erste Hilfskonstruktion 2 erfüllt die Funktion eines steifen Trägers, auf dem eine angemessenen Anzahl photogrammetrischer Marken 3 angebracht werden, falls derartige Marken eingesetzt werden sollen. Die Marken 3 sind als weiße Punkte in der Fig. 1b ersichtlich. Die erste Hilfskonstruktion 2 ist - wie ebenfalls aus der Fig. 1b ersichtlich - vorteilhaft halbkreisförmig ausgebildet.

Weiterhin wird an der Karosserie des bruchteilhaft dargestellten Fahrzeugs 4 eine zweite Hitfskonstruktion 5 so angebracht, daß diese während der Messung ortsfest zur Karosserie des Fahrzeugs 4 bleibt. Analog zur ersten Hilfskonstruktion 2, kann bevorzugt die zweite Hilfskonstruktion 5 ebenfalls aus einem leichten, formbeständigen Material ausgebildet werden.

In der Ausführungsform der Fig. 1b nimmt die zweite Hilfskonstruktion 5 die Form eines Bogens, der die halbkreisförmige erste Hilfskonstruktion 2 umspannt. Die erste und zweite Hilfskonstruktion können, wie gezeigt, im wesentlichen in einer einzigen Ebene enthalten sein; es ist jedoch auch ein versetzte Anordnung möglich.

Der obige Aufbau gestattet in vorteilhafter Weise die freie Drehung des Rades während des Fahrbetriebs. Die zweite Hilfskonstruktion 5 dient ebenfalls als Träger einer angemessenen Anzahl photogrammetrischer Marken 3', falls derartige Marken eingesetzt werden sollen.

Die Hilfskonstruktionen 2 und 5 werden so zueinander positioniert, daß sie in jeder Fahrsituation von einer oberhalb am Fahrzeug 4 angebrachten Kamera 6 möglichst vollflächig aufgenommen werden können. Nach einem bevorzugten Aspekt der Erfindung wird die Kamera 6 flexibel an der Karosserie aufgehängt. Versuche der Anmelderin haben ergeben, daß mit einer Hochgeschwindigkeitskamera, die eine Auflösung von 512 * 512 Pixeln besitzt, besonders gute Ergebnisse erzielt werden können. Eine in den Figuren nicht gezeigte Stroboskopbeleuchtung kann für die Kamera vorgesehen werden.

Grundsätzlich muß die Kamera 6 nur derart angeordnet sein, um beide Hilfskonstruktionen 2 und 5 gleichzeitig "sehen" zu können. Ein fester Bezug ist zu keiner der beiden Hilfskonstruktionen nötig. Daher ist es nicht unbedingt notwendig, die Kamera an der Fahrzeugkarosserie zu befestigen, wie in den Figuren der vorliegenden Anmeldung gezeigt, solange gewährleistet wird, daß die Kamera der Bewegung des Fahrzeugs bzw. des zu erfassenden Objekts folgt.

Vor der zeitaufgelösten photogrammetrischen Erfassung werden die an Rad 1 und Karosserie angebrachten und mit den Marken 3 und 3' versehenen Hilfskonstruktionen 2 und 5 zunächst aus verschiedenen Kamerapositionen aufgenommen und mittels eines Standardverfahrens - wie z.B. unter http://www.geodetic.com/Basics.htm beschrieben - wird eine Simultankalibration der Kamera 6 und eine Positionsbestimmung der Marken 3 und 3' vorgenommen. Danach beginnt die eigentliche zeitaufgelöste photogrammetrische Erfassung, für die nur noch Aufnahmen aus einer Kameraposition heraus erforderlich sind.

Die von der Kamera 6 aufgenommenen Bilder werden auf einem für die entstehende Datenmenge geeigneten nicht gezeigten Speichermedium aufgezeichnet und nach Abschluß der Messung offline mit Standardmethoden der Photogrammetrie (Einkamerasystem) ausgewertet. Eine online Auswertung ist auch denkbar, sofern geeignete Rechenmittel zur Verfügung stehen. Das Speichermedium muß eine zur Aufnahme der für derartige Anwendungen üblichen Datenmengen ausreichende Kapazität aufweisen. Die Auswertung der aufgezeichneten Bilddaten kann mit einer Spezialhardware oder einem geeigneten PC erfolgen.

Bei dieser Auswertung wird jeweils ein Bild mit der simultanen Aufnahme der beiden Objekte (Rad 1 und Karosserie) und der beiden Hilfskonstruktionen 2 und 5 dem sog. Resection-Verfahren (ohne Bündelausgleich) unterzogen, wobei die Anwendung dieses Verfahrens jeweils separat für beide Hilfskonstruktionen 2 und 5 erfolgt. Bestimmt werden jeweils die Punktkoordinaten der Marken 3 und 3', und jeweils eine (virtuelle) Position der Kamera. Abschließend erfolgt eine Transformation in ein gemeinsames Koordinatensystem, in dem die relative Position der beiden Objekte (nach Berechnung) bekannt ist.

Untersuchungen der Anmelderin haben ergeben, daß geeignete Ergebnisse mit der oben genannten Kameraauflösung erzielt werden können, wobei Kamera und nachgeschaltete Auswerteelektronik in der Lage waren bis zu 160 Messungen pro Sekunde durchzuführen. Abhängig von den besonderen Anforderungen könnten somit bis zu ca. 200000 Einzelmessungen in einer ununterbrochenen Zeitspanne von 20 Minuten durchgeführt werden.

Das erfindungsgemäße Verfahren besteht darin, daß während der Messung faktisch die relative Position (Ort und Orientierung) der beiden Hilfskonstruktionen 2 und 5 zueinander durch die Kamera 6 und die nachgeschaltete Auswertung bestimmt werden kann. Dabei ist es nicht notwendig, daß die Kamera 6 starr zu einer der Hilfskonstruktionen 2 oder 5 steht. Die eventuellen Vibrationen spielen hier keine Rolle.

Ist die Ausgangslage beider Hilfskonstruktionen bekannt - z. B. durch Bestimmung in der KO-Lage des Fahrzeugs -, so ist die Radlage zu jedem Zeitpunkt der Messung exakt bestimmbar, sofern der feste Bezug der zweiten Hilfskonstruktion 5 zur Karosserie gewährleistet werden kann. Der Referenzbezug zur Karosserie ist ein prinzipielles Problem bei jeder Meßanordnung. Dieses Problem wird von der Erfindung besonders vorteilhaft gelöst, indem die zweite Hilfskonstruktion 5 mit einer extrem geringen Masse und hoher Steifigkeit (d. h. möglichst geringe Eigenbewegungen) gefertigt wird. Für beide Hilfskonstruktion wird vorzugsweise ein carbonfaserverstärkter Kunststoff (CFK) eingesetzt, der die vorstehenden Erfordernisse erfüllt. Es sind jedoch auch andere Materialien vergleichbarer Festigkeit denkbar.

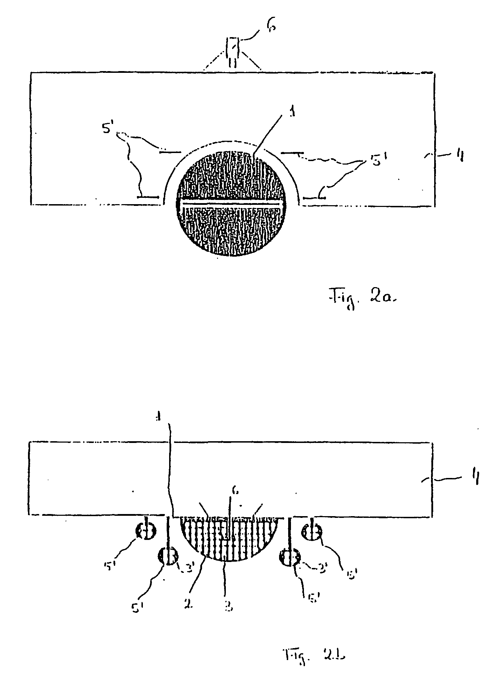

Unter Bezugnahme auf die Figuren 2a und 2b wird die zweite Ausführungsform der Erfindung erläutert. Abweichend von der ersten Ausführungsform ist die zweite Hilfskonstruktion 5' aus einer Vielzahl von Einzelkomponenten ausgebildet, die in einer oder mehreren Ebenen an der Karosserie angebracht werden. In Fig. 2a sind zwei der Einzelkomponenten in einer Ebene angeordnet, die in etwa der Ebene der ersten Hilfskonstruktion 2 entspricht, wohingegen die anderen zwei Einzelkomponenten in einer Ebene über den Radumfang liegen.

Mit der zweiten Ausführungsform besteht nach einem besonders vorteilhaften Aspekt der Erfindung zusätzlich die Möglichkeit, die Lage dieser Einzelkomponenten zueinander - die sich idealerweise nicht ändern dürfte - zu überwachen und damit Informationen über etwaige Eigenschwingungen zu gewinnen.

## Patentansprüche

1. Vorrichtung zur dreidimensionalen zeitaufgelösten photogrammetrischen Erfassung eines bewegten Objekts, die folgendes umfaßt:
zwei zur photogrammetrischen Erfassung geeignete, formbeständige Hilfskonstruktionen (2, 5, 5'),
eine einzige Kamera (6),
wobei die erste Hilfskonstruktion (2) am zu erfassenden Objekt (1) angebracht ist;
wobei die erste Hilfskonstruktion (2) in Bezug auf die zweite Hilfskonstruktion (5, 5') beweglich ist;
wobei beide Hilfskonstruktionen (2, 5, 5') in Bezug auf die Kamera (6) beweglich sind;
wobei die Kamera (6) derart in Bezug zur ersten und zweiten Hilfskonstruktion (2, 5, 5') angeordnet ist, um eine relative Bewegung dieser und somit die Position des Objekts (1) aus einer einzigen Perspektive zu erfassen.

2. Vorrichtung nach Anspruch 1 zur zeitaufgelösten photogrammetrischen Messung der dreidimensionalen Radposition eines Fahrzeugs (4) im Fahrbetrieb,
wobei die erste Hilfskonstruktion (2) am Fahrzeugrad (1) angebracht ist;
wobei die zweite Hilfskonstruktion (5, 5') an der Karosserie des Fahrzeugs (4) angebracht ist;
wobei die Kamera (6) an der Karosserie des Fahrzeugs (4) angebracht ist;
wobei die Kamera (6) derart in Bezug zur ersten und zweiten Hilfskonstruktion (2, 5, 5') angeordnet ist, um eine relative Bewegung dieser und somit die Position des Rades (1) zu erfassen.

3. Vorrichtung nach Anspruch 1 oder 2, wobei die erste Hilfskonstruktion (2) halbkreisförmig ausgebildet ist und zweite Hilfskonstruktion (5) die Form eines Bogens einnimmt, der die halbkreisförmige erste Hilfskonstruktion (2) umspannt.

4. Vorrichtung nach Anspruch 1 oder 2, wobei die erste Hilfskonstruktion (2) halbkreisförmig ausgebildet ist und zweite Hilfskonstruktion (5') aus einer Vielzahl von Einzelkomponenten ausgebildet ist.

5. Vorrichtung nach Anspruch 2, wobei die erste Hilfskonstruktion (2) halbkreisförmig ausgebildet ist und zweite Hilfskonstruktion (5') aus einer Vielzahl von im wesentlichen kreisförmigen Einzelkomponenten ausgebildet ist, die in einer oder mehreren Ebenen an der Karosserie anbringbar sind.

6. Vorrichtung nach einem der Ansprüche 1 bis 5, wobei die erste und die zweite Hilfskonstruktion (2, 5, 5') derart zueinander positioniert werden, daß sie in jeder Situation von der Kamera (6) möglichst vollflächig aufgenommen werden können.

7. Vorrichtung nach einem der Ansprüche 1 bis 6, wobei die erste und/oder die zweite Hilfskonstruktion (2, 5, 5') aus einem carbonfaserverstärkter Kunststoff ausgebildet sind.

8. Vorrichtung nach einem der Ansprüche 1 bis 6, wobei die erste und/oder die zweite Hilfskonstruktion (2, 5, 5') aus einem leichten, formbeständigen Material ausgebildet sind.

9. Vorrichtung nach einem der Ansprüche 1 bis 8, wobei die erste und/oder die zweite Hilfskonstruktion (2, 5, 5') mit einer angemessenen Anzahl photogrammetrischer Marken (3, 3') ausgebildet sind.

10. Vorrichtung nach einem der Ansprüche 1 bis 9, die weiterhin ein mit der Kamera (6) operativ verbundenes Speichermedium zur Aufzeichnung der von der Kamera (6) ausgegebenen Bilddaten aufweist, und eine Bildauswertungseinheit, zur Auswertung der Bilddaten mit Standardmethoden der Photogrammetrie.

11. Vorrichtung nach einem der Ansprüche 1 bis 10, wobei die Kamera (6) flexibel angebracht ist.

12. Verfahren zur dreidimensionalen zeitaufgelösten photogrammetrischen Erfassung eines bewegten Objekts, das folgendes umfaßt:
Bereitstellung zweier zur photogrammetrischen Erfassung geeigneten, formbeständigen Hilfskonstruktionen (2, 5, 5') und einer Kamera (6);
Anbringung der ersten Hilfskonstruktion (2) am zu erfassenden Objekt (1) und
Anordnung der zweiten Hilfskonstruktion (2) derart,
daß beide Hilfskonstruktionen (2, 5, 5') aus einer einzigen Perspektive erfaßbar sind;
wobei die erste Hilfskonstruktion (2) in Bezug auf die zweite Hilfskonstruktion (5, 5') beweglich ist;
wobei beide Hilfskonstruktionen (2, 5, 5') in Bezug auf die Kamera (6) beweglich sind;
Kalibration der Kamera (6);
Erfassung aus einer einzigen Perspektive der relativen Position des Objekts (1) anhand der Ausgangslage der ersten und zweiten Hilfskonstruktion (2, 5, 5').

13. Verfahren nach Anspruch 12 zur zeitaufgelösten photogrammetrischen Messung der dreidimensionalen Radposition eines Fahrzeugs (4) im Fahrbetrieb,
wobei die erste Hilfskonstruktion (2) am zu erfassenden Fahrzeugrad (1) angebracht wird und
wobei die zweite Hilfskonstruktion (5, 5') an der Karosserie des Fahrzeugs (4) angebracht wird,
wobei die Kamera (6) an der Karosserie des Fahrzeugs (4) angebracht wird,
wobei die Erfassung der relativen Position des Rades (1) aus einer einzigen Perspektive erfolgt anhand der Ausgangslage der ersten und zweiten Hilfskonstruktion (2, 5, 5').

14. Verfahren nach Anspruch 12 oder 13, wobei die Erfassung aus einer einzigen Perspektive mit einer in Bezug auf die zweite Hilfskonstruktion (5, 5') im wesentlichen ortsfest angebrachten Kamera (6) erfolgt.

15. Verfahren nach einem der Ansprüche 12 bis 14, wobei die Auswertung der Position des Objekts bzw. des Rades (1) mittels Standardmethoden der Photogrammetrie durchgeführt wird.

16. Verfahren nach einem der Ansprüche 13 bis 15, wobei die zweite Hilfskonstruktion (5') aus einer Vielzahl von Einzelkomponenten ausgebildet ist, die in einer oder mehreren Ebenen an der Karosserie des Fahrzeugs (4) anbringbar sind, und wobei die Lage dieser Einzelkomponenten zueinander überwacht wird, um Informationen über etwaige Eigenschwingungen zu gewinnen.

## Claims

1. Device for three-dimensional time-resolved photogrammetric measurement of a moving object, comprising the following:
two dimensionally stable auxiliary assemblies (2, 5, 5') suitable for photogrammetric measurement, and
a single camera (6),
in which the first auxiliary assembly (2) is fitted on the object (1) to be measured;
in which the first auxiliary assembly (2) can move with reference to the second auxiliary assembly (5, 5'),
in which the two auxiliary assemblies (2, 5, 5') can move with reference to the camera (6); and
in which the camera (6) is arranged with reference to the first and second auxiliary assemblies (2, 5, 5') in such a way as to measure a relative movement thereof, and thus to measure the position of the object (1) from a single perspective.

2. Device according to Claim 1 for time-resolved photogrammetric measurement of the three-dimensional wheel position of a vehicle (4) being driven,
in which the first auxiliary assembly (2) is fitted on the vehicle wheel (1);
in which the second auxiliary assembly (5, 5') is fitted on the body of the vehicle (4);
in which the camera (6) is fitted on the body of the vehicle (1); and
in which the camera (6) is arranged with reference to the first and second auxiliary assemblies (2, 5, 5') in such a way as to measure a relative movement thereof, and thus to measure the position of the wheel (1).

3. Device according to Claim 1 or 2, in which the first auxiliary assembly (2) is of semicircular design, and the second auxiliary assembly (5) takes the form of an arc which spans the semicircular first auxiliary assembly (2).

4. Device according to Claim 1 or 2, in which the first auxiliary assembly (2) is of semicircular design, and the second auxiliary assembly (5') is formed from a multiplicity of individual components.

5. Device according to Claim 2, in which the first auxiliary assembly (2) is of semicircular design, and the second auxiliary assembly (5') is formed from a multiplicity of substantially circular individual components which can be fitted in one or more planes on the body.

6. Device according to one of Claims 1 to 5, in which the first and the second auxiliary assemblies (2, 5, 5') are positioned relative to one another in such a way that they can be recorded as far as possible over their entire surface in any situation of the camera (6).

7. Device according to one of Claims 1 to 6, in which the first and/or the second auxiliary assemblies (2, 5, 5') are formed from a carbon-fibre-reinforced plastic.

8. Device according to one of Claims 1 to 6, in which the first and/or the second auxiliary assemblies (2, 5, 5') are formed from a light, dimensionally stable material.

9. Device according to one of Claims 1 to 8, in which the first and/or the second auxiliary assemblies (2, 5, 5') are designed with a suitable number of photogrammetric marks (3, 3').

10. Device according to one of Claims 1 to 9, which further has a storage medium, operatively connected to the camera (6), for recording the image data output by the camera (6) and an image evaluation unit for evaluating the image data with the aid of standard methods of photogrammetry.

11. Device according to one of Claims 1 to 10, in which the camera (6) is fitted flexibly.

12. Method for three-dimensional time-resolved photogrammetric measurement of a moving object, which comprises the following:
providing two dimensionally stable auxiliary assemblies (2, 5, 5'), suitable for photogrammetric measurement and
a camera (6);
fitting the first auxiliary assembly (2) on the object (1) to be measured, and
arranging the second auxiliary assembly (2) in such a way,
that the two auxiliary assemblies (2, 5, 5') can be measured from a single perspective;
the first auxiliary assembly (2) being movable with reference to the second auxiliary assembly (5, 5'); and
the two auxiliary assemblies (2, 5, 5') being movable with reference to the camera (6);
calibration of the camera (6); and
measuring the relative position of the object (1) from a single perspective with the aid of the initial position of the first and second auxiliary assemblies (2, 5, 5').

13. Method according to Claim 12 for time-resolved photogrammetric measurement of the three-dimensional wheel position of a vehicle (4) being driven,
in which the first auxiliary assembly (2) is fitted on the vehicle wheel (1) to be measured, and
in which the second auxiliary assembly (5, 5') is fitted on the body of the vehicle (4),
in which the camera (6) is fitted on the body of the vehicle (4), and
in which the measurement of the relative position of the wheel (1) is performed from a single perspective with the aid of the initial position of the first and second auxiliary assemblies (2, 5, 5').

14. Method according to Claim 12 or 13, in which the measurement is performed from a single perspective with the aid of a camera (6) which is fitted in an essentially stationary fashion with reference to the second auxiliary assembly (5, 5').

15. Method according to one of Claims 12 to 14, in which the evaluation of the position of the object or the wheel (1) is carried out by means of standard methods of photogrammetry.

16. Method according to one of Claims 13 to 15, in which the second auxiliary assembly (5') is formed from a multiplicity of individual components which can be fitted in one or more planes on the body of the vehicle (4), and in which the position of these individual components relative to one another is monitored in order to obtain information relating to any possible natural vibrations.

## Revendications

1. Dispositif de saisie photogrammétrique tridimensionnelle résolue dans le temps d'un objet mis en mouvement, lequel dispositif comprend ce qui suit :
deux constructions auxiliaires (2,5,5') de forme stable, appropriées à la saisie photogrammétrique, une seule caméra (6),
la première construction auxiliaire (2) étant appliquée sur l'objet (1) à saisir ;
la première construction auxiliaire (2) étant mobile par rapport à la deuxième construction auxiliaire (-5,5') ;
les deux constructions auxiliaires (2,5,5') étant mobiles par rapport à la caméra (6) ;
la caméra (6) étant disposée par rapport aux première et deuxième constructions auxiliaires (2,5,5') de façon à saisir un mouvement relatif de cette dernière et ainsi la position de l'objet (1) à partir d'une seule perspective.

2. Dispositif selon la revendication 1, destiné à la mesure photogrammétrique résolue dans le temps de la position tridimensionnelle d'une roue d'un véhicule (4) roulant,
la première construction auxiliaire (2) étant appliquée sur la roue (1) du véhicule ;
la deuxième construction auxiliaire (5,5') étant appliquée sur la carrosserie du véhicule (4) ;
la caméra (6) étant appliquée sur la carrosserie de l'automobile (4) ;
la caméra (6) étant disposée par rapport aux première et deuxième constructions auxiliaires (2,5,5') de façon à saisir un mouvement relatif de cette dernière et ainsi la position de la roue (1).

3. Dispositif selon la revendication 1 ou 2, dans lequel la première construction auxiliaire (2) est conformée en demi-cercle et la deuxième construction auxiliaire (5) prend la forme d'un arc qui entoure la première construction auxiliaire (2) en forme de demi-cercle.

4. Dispositif selon la revendication 1 ou 2, dans lequel la première construction auxiliaire (2) est conformée en demi-cercle et la deuxième construction auxiliaire (5') est conformée en une multitude de composants individuels.

5. Dispositif selon la revendication 2, dans lequel la première construction auxiliaire (2) est conformée en demi-cercle et la deuxième construction auxiliaire (5') est conformée en une multitude de composants individuels essentiellement circulaires qui peuvent être appliquées sur la carrosserie en un plan ou en plusieurs plans.

6. Dispositif selon l'une quelconque des revendications 1 à 5, dans lequel les première et deuxième constructions auxiliaires (2,5,5') sont positionnées l'une par rapport à l'autre de façon à ce qu'elles puissent être filmées dans chaque situation de la caméra (6) autant que possible sur toute leur surface.

7. Dispositif selon l'une quelconque des revendications 1 à 6, dans lequel la première et/ou la deuxième construction auxiliaire (2,5,5') sont conformées en une matière synthétique renforcée par des fibres de carbone.

8. Dispositif selon l'une quelconque des revendications 1 à 6, dans lequel la première et/ou la deuxième construction auxiliaire (2,5,5') sont conformées en un matériau léger de forme stable.

9. Dispositif selon l'une quelconque des revendications 1 à 8, dans lequel la première et/ou la deuxième construction auxiliaire (2,5,5') sont conformées avec un nombre adéquat de repères photogrammétriques (3,3').

10. Dispositif selon l'une quelconque des revendications 1 à 9, qui présente en outre un support de mémoire connecté de manière opérationnelle à la caméra (6) afin d'enregistrer les données d'image délivrées par la caméra (6), et une unité d'exploitation d'image pour exploiter les données d'image au moyen de méthodes normalisées de la photogrammétrie.

11. Dispositif selon l'une quelconque des revendications 1 à 10, dans lequel la caméra (6) est appliquée de façon flexible.

12. Procédé de saisie photogrammétrique tridimensionnelle résolue dans le temps d'un objet mis en mouvement, procédé qui comprend ce qui suit :
mise à disposition de deux constructions auxiliaires (2,5,5') de forme stable, appropriées à la saisie photogrammétrique et d'une caméra (6) ;
application de la première construction auxiliaire (2) sur l'objet (1) à saisir et
disposition de la deuxième construction auxiliaire (2) de façon à ce que
les deux constructions auxiliaires (2,5,5') puissent être saisies à partir d'une seule perspective ;
la première construction auxiliaire (2) étant mobile par rapport à la deuxième construction auxiliaire (5,5') ;
les deux constructions auxiliaires (2,5,5') étant mobiles par rapport à la caméra (6) ;
calibrage de la caméra (6) ;
saisie à partir d'une seule perspective de la position relative de l'objet (1) au moyen de la position de départ des première et deuxième constructions auxiliaires (2,5,5').

13. Procédé selon la revendication 12, destiné à la mesure photogrammétrique résolue dans le temps de la position tridimensionnelle d'une roue d'un véhicule (4) roulant,
la première construction auxiliaire (2) étant appliquée sur la roue (1) du véhicule à saisir ;
la deuxième construction auxiliaire (5,5') étant appliquée sur la carrosserie du véhicule (4) ;
la caméra (6) étant appliquée sur la carrosserie de l'automobile (4) ;
la saisie de la position relative de la roue (1) à partir d'une seule perspective s'effectuant au moyen de la position de départ des première et seconde constructions auxiliaires (2,5,5').

14. Procédé selon la revendication 12 ou 13, dans lequel la saisie à partir d'une seule perspective s'effectue au moyen d'une caméra (6) appliquée de façon essentiellement fixe par rapport à la deuxième construction auxiliaire (5,5').

15. Procédé selon l'une quelconque des revendications 12 à 14, dans lequel l'exploitation de la position de l'objet ou selon le cas de la roue (1) est réalisée au moyen de méthodes normalisées de la photogrammétrie.

16. Procédé selon l'une quelconque des revendications 13 à 15, dans lequel la deuxième construction auxiliaire (5') est conformée en une multitude de composants individuels qui peuvent être appliqués sur la carrosserie du véhicule (4) en un plan ou en plusieurs plans, et dans lequel la position de ces composants individuels les uns par rapport aux autres est surveillée afin d'obtenir des informations sur d'éventuelles vibrations propres.
